(19) **Europäisches Patentamt / European Patent Office / Office européen des brevets**

(11) **EP 1 643 661 B1**

(12) **EUROPEAN PATENT SPECIFICATION**

(45) Date of publication and mention of the grant of the patent:
**28.05.2008 Bulletin 2008/22**

(51) Int Cl.:
*H04B 7/06* (2006.01)       *H04B 7/08* (2006.01)
*H04L 1/00* (2006.01)

(21) Application number: **05019436.4**

(22) Date of filing: **07.09.2005**

(54) **MIMO system with adaptive switching of transmission scheme**

MIMO System mit adaptiver Umschaltung des Übertragungsschemas

Système MIMO avec commutation adaptatif du schéma d'emission

(84) Designated Contracting States:
**DE FI FR GB IT SE**

(30) Priority: **07.09.2004 US 607738 P**
**29.12.2004 KR 2004115347**

(43) Date of publication of application:
**05.04.2006 Bulletin 2006/14**

(73) Proprietors:
• **Samsung Electronics Co., Ltd.**
**Yeongtong-gu**
**Suwon-si, Gyeonggi-do (KR)**
• **THE BOARD OF REGENTS, THE UNIVERSITY OF TEXAS**
**SYSTEM**
**Austin, Texas 78701 (US)**

(72) Inventors:
• **Antonio, Forenza**
**Yeongtong-gu**
**Suwon-si**
**Gyeonggi-do (KR)**
• **Heath, Robert W.**
**Austin**
**TX 78729 (US)**
• **Park, Hyoung-Woon**
**Yeongtong-gu**
**Suwon-si**
**Gyeonggi-do (KR)**
• **Yang, Ho**
**Yeongtong-gu**
**Suwon-si**
**Gyeonggi-do (KR)**
• **Marios, Kountouris**
**Yeongtong-gu**
**Suwon-si**
**Gyeonggi-do (KR)**
• **Ashish, Pandharipanda**
**Yeongtong-gu**
**Suwon-si**
**Gyeonggi-do (KR)**
• **Kim, Ho-Jin**
**Yeongtong-gu**
**Suwon-si**
**Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A1- 1 355 434**       **EP-A2- 1 521 386**
**WO-A-03/085876**       **WO-A2-02/25853**

EP 1 643 661 B1

**Description**

The present invention relates generally to multiple-input multiple-output (MIMO) communication systems and a corresponding method, and more particularly to a MIMO communication system for selecting an optimal MIMO transmission and reception scheme and communicating using the selected scheme.

Recent wireless communication technology improvements have been directed to various multimedia communications. Accordingly, a large amount of research is being conducted on high-speed data transmission technologies. The current third generation (3G) wireless communication systems are based on a code division multiple access (CDMA) transmission scheme. However, because the CDMA transmission scheme has limitations in processing large-capacity wireless data, a multicarrier based orthogonal frequency division multiplexing (OFDM) transmission scheme is being considered for next generation wireless communication systems.

A basic concept of the OFDM transmission scheme is to increase a data rate by converting a serial input data stream into N parallel data streams and transmitting the N parallel data streams through separated subcarriers.

Because the OFDM subcarriers are orthogonal, the spectra of subcarriers can overlap each other. A receiver can easily separate subcarriers using a simple signal processing technique. In this case, as compared with when data is sequentially transmitted using a single carrier, a transmission symbol interval is lengthened and the influence of a channel delay time or impulse noise is reduced. The OFDM transmission scheme can reduce interference between successive symbols, thereby offering the robustness to a multipath channel. Further, the OFDM transmission scheme can reduce the complexity of channel equalization, and can improve the spectral efficiency, as compared with a conventional frequency division scheme.

However, an increase in the transmission bandwidth alone is not sufficient to satisfy a target transmission rate for the next generation wireless communication systems. To increase a transmission rate for a given bandwidth, many methods have been presented. Currently, it is known that a method using multiple antennas is most effective. Although, multiple-input multiple-output (MIMO) multiplexing scheme for increasing a transmission rate using multiple antennas is difficult to be applied for wideband transmission. However, when OFDM characteristics are used, the MIMO multiplexing scheme can be applied for the wideband transmission. Accordingly, a large amount of research is being conducted on a method for combining MIMO multiplexing and OFDM, and new methods are being proposed.

In the wireless communication system, an increase in overall system throughput as well as an instantaneous transmission rate is important. A method that is most suitable to increase the overall system throughput is adaptive modulation and coding (AMC). AMC adapts to variations in a transmission environment. Also, in the next generation wireless communication systems, AMC is used as basis technology to improve the overall system throughput. AMC is suitable for an OFDM system because the OFDM system transmits different signals on a subcarrier-by-subcarrier basis and can be applied to subcarriers.

An increase in the transmission bandwidth alone is not sufficient to satisfy a target transmission rate for fourth generation (4G) wireless communication systems. To increase a transmission rate for a given bandwidth, many methods are present. As indicated above, it is known that a method using multiple antennas is most effective. Further, when OFDM characteristics are used, the MIMO scheme can be applied for the wideband transmission. Accordingly, a large amount of research is being conducted on a method for combining MIMO and OFDM, and new methods are being proposed.

The MIMO scheme can improve reception reliability for a given data rate or increase a data rate for given reliability. That is, diversity gain can be obtained by transmitting the same data through multiple paths in an environment in which a channel state is bad, and multiplexing gain can be obtained by transmitting individual data streams through different spatial channels in a parallel fashion in an environment in which a channel state is good.

Current research associated with MIMO is mostly focused on a transmission scheme for obtaining the maximum diversity gain or the maximum spatial multiplexing gain. Further, a technique for switching diversity mode and multiplexing mode according to channel variation has been proposed.

A link adaptation algorithm serving as one transmission mode switching technique is designed to maximize the spectral efficiency by switching between transmission diversity (TM) mode and spatial multiplexing (SM) mode based on signal to noise ratios (SNRs) and time/space indicators. However, the spatial selectivity of a channel is not considered in the link adaptation algorithm.

A multiplexing and diversity mode switching technique serving as another transmission mode switching technique based on the distance between signal points in the constellation has been proposed. In the constellation based transmission mode switching technique, a mode selection criterion uses the condition number of instantaneous channel realization as spatial information. However, this transmission mode switching technique may obtain significant diversity gain, but is based on a fixed transmission rate.

WO 03/085876 A1 discloses a system and method of dynamically optimizing a transmission mode of a wirelessly transmitted information. The optimization of the transmission mode of the wirelessly transmitted data includes a selection of a first transmission mode based on a pre-determined channel database and a first channel characterization. The first channel characterization can be based upon signally transmitted in an initial mode. An error factor is generated based on a difference between an estimated performance characteristic, and an expected performance characteristic. A subsequent transmission mode is selected based upon a pre-determined channel database, the error factor and a subsequent channel characterization. The pre-determined channel database can include a pre-determined lock-up table that provides transmission mode selection based upon the general characterizations. The lock-up table generally includes a plurality of quality parameter thresholds that determine the selection of a transmission mode. Alternatively, the optimization includes receiving transmission signal that includes data encoded in an initial transmission mode. A first quality parameter of the received transmission signal is measured. A subsequent transmission mode is selected based upon the quality parameter. Transmission signals are received having data encoded in the subsequent transmission mode. A second quality parameter is measured. A parameter is adjusted within selection criteria of another subsequent transmission mode based upon the second quality parameter.

It is the object of the present invention to provide an improved multiple input/multiple output, MIMO, communication system and improved method that increase the spectral efficiency of a predefined target error rate by performing adaptive transmission mode switching using a novel switching criterion.

This objection is solved by the subject matter of the independent claim.

Preferred embodiments are defined in the dependent claims.

The above and other aspects of the present invention can be achieved by a multiple-input multiple-output (MIMO) wireless communication system. The system includes: a transmitter having a plurality of transmit antennas for selecting one of at least two transmission schemes including a spatial multiplexing scheme and a spatial diversity scheme, processing a signal in the selected transmission scheme, and transmitting the signal through the plurality of transmit antennas; and at least one receiver having a plurality of receive antennas for processing a signal through the plurality of receive antennas in a reception scheme mapped to a transmission scheme of the transmitter.

According to another aspect of the present invention, there is provided a corresponding method for selecting an optimal MIMO transmission and reception scheme.

The above and other aspects, features, and advantages of the present invention will be more clearly understood from the following detailed description taken in conjunction with the accompanying drawings, in which:

FIG. 1 is a graph illustrating cumulative density function (CDF) curves of a relative condition number for four channel models considered in the present invention;

FIG. 2 is a graph illustrating a look-up table (LUT) applied to an adaptive transmission mode switching technique in accordance with a preferred embodiment of the present invention;

FIG. 3 is a block diagram illustrating a structure of a transmitter in a multiple-input multiple-output (MIMO) system using an adaptive transmission mode switching technique in accordance with a preferred embodiment of the present invention;

FIG. 4 is a block diagram illustrating a receiver in a MIMO system using an adaptive transmission mode switching technique in accordance with a preferred embodiment of the present invention; and

FIG. 5 is a graph illustrating performance simulation results for an adaptive transmission mode switching method in accordance with a preferred embodiment of the present invention and a conventional fixed MIMO transmission technique using an adaptive modulation and coding scheme (MCS).

Preferred embodiments in accordance with the present invention will be described in detail herein below with reference to the accompanying drawings. In the following description of the present invention, a detailed description of known functions and configuration incorporated herein will be omitted when it may obscure the subject matter of the present invention.

In accordance with the present invention, the adaptive transmission mode switching method introduces a new switching criterion to increase the spectral efficiency for a predefined target error rate. The adaptive transmission mode switching method characterizes channel spatial selectivity based on a metric derived from spatial correlation matrices.

In accordance with the present invention, the adaptive transmission mode switching method estimates channel quality and adaptively selects a MIMO transmission scheme that maximizes the throughput for a given error rate and transmit power on the basis of the estimated channel quality. This adaptive transmission mode switching algorithm can be practically implemented by the definition of a set of link quality regions, which represent typical channel scenarios. These link quality regions are mapped to a set of transmission modes defined by a combination of modulation/coding and MIMO schemes through a look-up table (LUT). Accordingly, the adaptive transmission mode switching algorithm estimates the link quality regions and selects the optimal mode for the current transmission from the LUT.

For convenience, the adaptive transmission mode switching method considers two extreme channel scenarios in a cellular system environment. The first channel scenario is defined by line-of-sight (LOS) and a cell edge region. In this case, a user terminal requires a diversity function because the channel has a low rank or a low signal to noise ratio (SNR). Therefore, diversity schemes, i.e., beamforming, are selected by the adaptive transmission mode switching algorithm of the present invention in order to increase the robustness of the link.

In the second channel scenario, rich scattering or a region adjacent to a base station characterizes the channel. In this case, because the channel has a high rank or high SNR, the adaptive transmission mode switching algorithm switches the transmission mode to a multiplexing scheme in order to increase the spectral efficiency.

In accordance with the present invention, the adaptive transmission mode switching method defines four different channel models according to spatial selectivity that is a function of angle spread (AS), number of clusters ($N_c$), and Ricean K-factor (or LOS). The spatial selectivity depends on an antenna array. Herein, a uniform linear array (ULA) with four antenna elements half-wavelength spaced apart is described. The four channel models are defined as shown in Table 1.

Table 1

|  | Model1 | Model 2 | Model 3 | Model 4 |
|---|---|---|---|---|
| LOS | N-LOS | N-LOS | Q-LOS | F-LOS |
| AS | [28°, 55°] | [24.6°, 22.4°] | [24.6°, 22.4°] | 30° |
| K-factor | -inf dB | -inf dB | 2 dB | 6 dB |
| $N_c$ | 6 | 2 | 2 | 1 |

The combination of these models and SNR threshold values defines link quality regions.

To define the link quality region, the present invention utilizes two link quality metrics, i.e., an average SNR and a relative condition number $D_\lambda$. The relative condition number $D_\lambda$ is expressed as shown in Equation (1).

$$D_\lambda = \frac{\lambda_{max}}{\lambda_{min}} \qquad \qquad \text{.... (1)}$$

In Equation (1), $\lambda_{max}$ and $\lambda_{min}$ denote the maximum and minimum eigenvalues of the spatial correlation matrix of the MIMO channel, and $1 \leq D_\lambda \leq +\infty$. The performance of MIMO systems depends on characteristics of a propagation environment. More specifically, capacity and error rate performance depend on the eigenvalues of transmit/receive spatial correlation matrices.

The present invention exploits the distribution of the relative condition number of the eigenvalues in order to estimate the spatial selectivity of the MIMO channel.

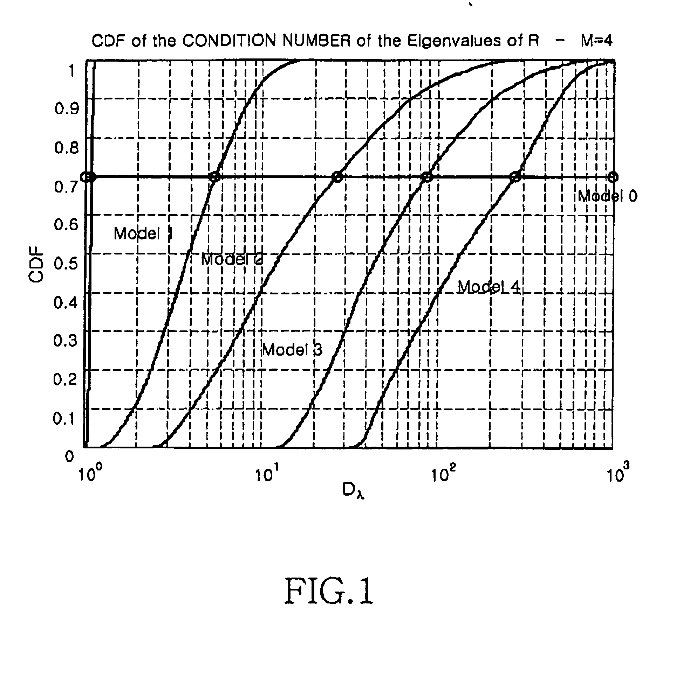

FIG. 1 is a graph illustrating cumulative density function (CDF) curves of a relative condition number for four channel models considered in the present invention. Because the CDF curves in FIG. 1 are well separated between different channel models, the condition number can be used as an indicator of the spatial selectivity of the channel. More specifically, by choosing 70% of the CDF as a threshold, four separable regions can be defined as follows.

Region #1 (N-LOS, High AS): $D_\lambda \in [1,5)$
Region #2 (N-LOS, Low AS): $D_\lambda \in [5,30)$
Region #3 (Q-LOS): $D_\lambda \in [30,90)$
Region #4 (F-LOS): $D_\lambda \in [90,+\infty)$

Each region defines a typical channel scenario characterized by a certain degree of spatial selectivity. The combination of these regions and different quantized values of a target SNR defines the link quality regions introduced in the present invention.

The condition number is obtained from the eigenvalues of the long-term transmit/receive spatial correlation matrices $R_{TX}$ and $R_{RX}$. These matrices are estimated using Equations (2) and (3).

$$\hat{R}_{TX} = E_t\{H^H(t) \cdot H(t)\} \qquad \qquad \text{..... (2)}$$

$$\hat{R}_{RX} = E_t \{ H(t) \cdot H^H(t) \} \qquad\qquad \cdots\cdots \quad (3)$$

In Equations (2) and (3), H(t) denotes the MIMO channel matrix at time $t$. Reliable estimates of the spatial correlation matrices can be obtained by averaging the MIMO channel matrices over 50 updates as in Equations (2) and (3).

For implementation of the adaptive transmission mode switching method of the present invention, the relative condition number is computed for both transmit and receive spatial correlation matrices. Thereafter, the adaptive transmission mode switching method selects the highest relative condition number between the transmitter and receiver and determines the current link quality region based on the selected highest condition number.

The present invention defines eight modulation and coding schemes (MCSs) according to the Institute of Electrical & Electronic Engineers (IEEE) 802.11a standard. The combination of the eight MCSs with three MIMO schemes results in a total of twenty four different transmission modes. A preferred embodiment of the present invention selects twelve modes including Mode 0 serving as non-transmission mode from the twenty four transmission modes and uses the selected modes. The selected twelve transmission modes are mapped to channel state information based on the average SNR and the relative condition number $D_\lambda$, and the mapping result is stored in the LUT.

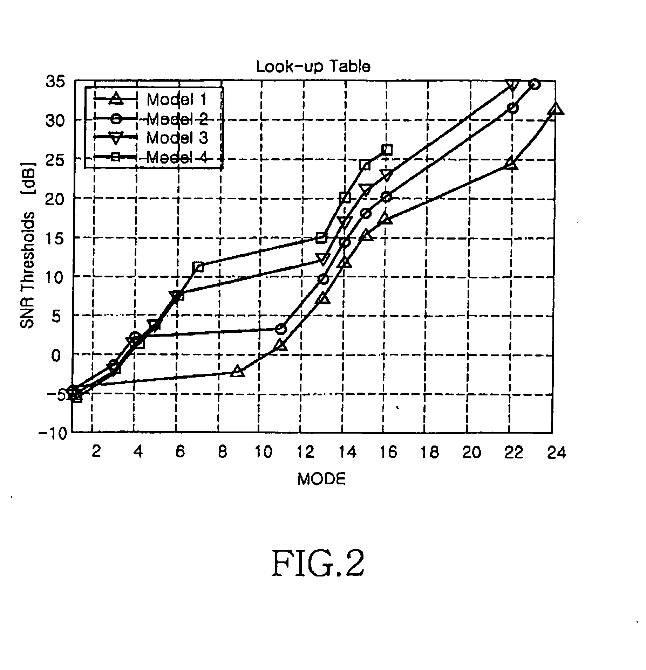

FIG. 2 is a graph illustrating the LUT applied to the adaptive transmission mode switching technique in accordance with a preferred embodiment of the present invention. When a channel model is given, an SNR value in each point is mapped to MIMO transmission mode. Mapping between link quality regions (defined by the combination of SNR threshold values and channel models) and transmission modes is obtained from a bit error rate (BER) curve in order to satisfy a predefined target error rate.

In accordance with the present invention, the adaptive transmission mode switching method estimates the link quality for the current transmission on the basis of the average SNR and the relative condition number. These parameters are used as inputs of the LUT for selecting the transmission mode that provides the highest throughput for a predefined target error rate.

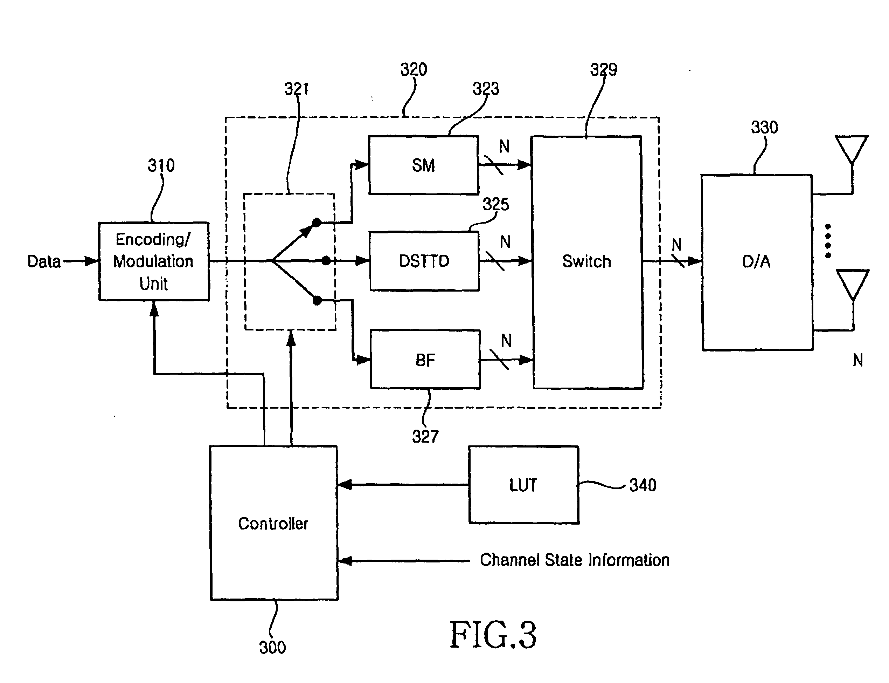

FIG. 3 is a block diagram illustrating a transmitter in a MIMO system using an adaptive transmission mode switching technique in accordance with a preferred embodiment of the present invention. In FIG. 3, the MIMO transmitter includes an encoding/modulation unit 310 for encoding and modulating input data in response to a control signal of a controller 300, a mode switching unit 320 for selecting transmission mode for symbols output from the encoding/modulation unit 310 in response to a control signal of the controller 300 and outputting the symbols in the selected transmission mode, and a digital to analog (D/A) conversion unit 330 for converting the transmission symbols output from the mode switching unit 320 according to D/A conversion and transmitting the converted symbols through N transmit antennas.

The mode switching unit 320 includes three modules operating in different MIMO algorithms, i.e., a spatial multiplexing (SM) module 323, a double space time transmit diversity (DSTTD) module 325, and a beamforming (BF) module 327. Further, the mode switching unit 320 includes a first switch 321 for coupling an output signal of the encoding/modulation unit 310 to an input terminal of the SM module 323, the DSTTD module 325, and the BF module 327, and a second switch 329 for selectively outputting an output signal of the SM module 323, the DSTTD module 325, and the BF module 327 to the D/A conversion unit 330.

The controller 300 receives channel state information fed back from the receiver, selects transmission mode mapped to the channel state information from an LUT 340, and outputs control signals to the encoding/modulation unit 310 and the mode switching unit 320.

In this embodiment of the present invention, three transmission schemes of SM, DSTTD, and BF can be selected and used as MIMO algorithms. However, it should be noted that the types of MIMO algorithms are not limited to BF, DSTTD, and BF, and the number of MIMO algorithms is not limited to only three.

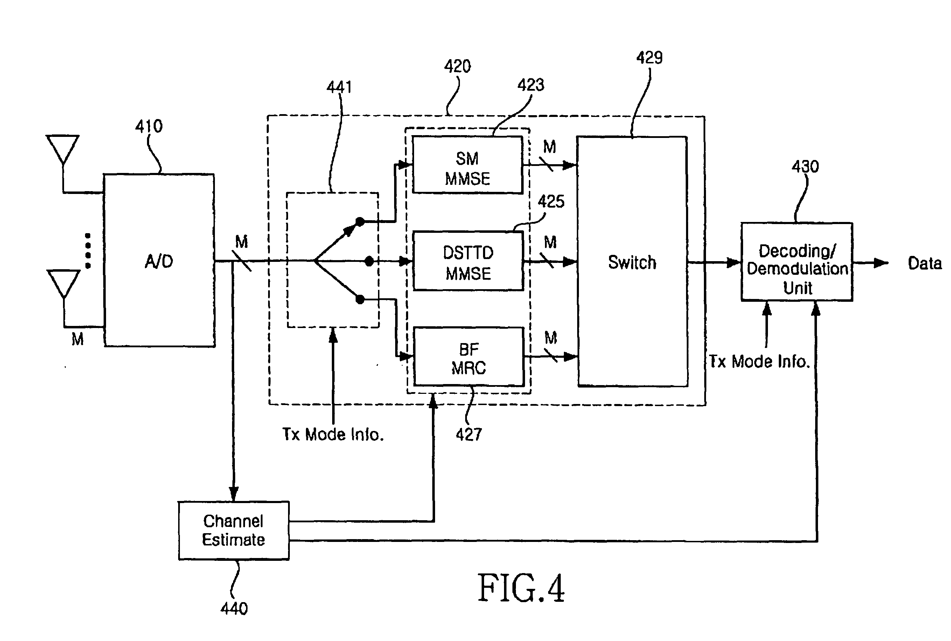

FIG. 4 is a block diagram illustrating a receiver in a MIMO system using an adaptive transmission mode switching technique in accordance with a preferred embodiment of the present invention. In FIG. 4, the MIMO receiver includes an analog to digital (A/D) conversion unit 410 for converting a signal received from the transmitter through a radio channel according to A/D conversion, a mode switching unit 420 for outputting an output signal of the A/D conversion unit 410 in reception mode mapped to the transmission mode selected by the transmitter, and a decoding/demodulation unit 430 for decoding and demodulating an output signal of the mode switching unit 420.

The mode switching unit 420 includes an SM-minimum mean squared error (MMSE) module 423, a DSTTD-MMSE module 425, and a BF-maximum ratio combining (MRC) module 427 serving as detection modules mapped to MIMO algorithms configuring the mode switching unit 420 of the transmitter. That is, an MMSE scheme is used for SM and DSTTD algorithms, and an MRC scheme is used for a BF algorithm. Further, the mode switching unit 420 includes a first switch 441 for coupling an output signal of the A/D conversion unit 410 to an input terminal of the SM-MMSE module 423, the DSTTD-MMSE module 425, and the BF-MRC module 427, and a second switch 429 for selectively outputting an output signal of the SM-MMSE module 423, the DSTTD-MMSE module 425, and the BF-MRC module 427 to the decoding/demodulation unit 430.

The decoding/demodulation unit 430 performs a decoding and demodulation operation using a channel estimate from a channel estimator 440 and transmission mode information.

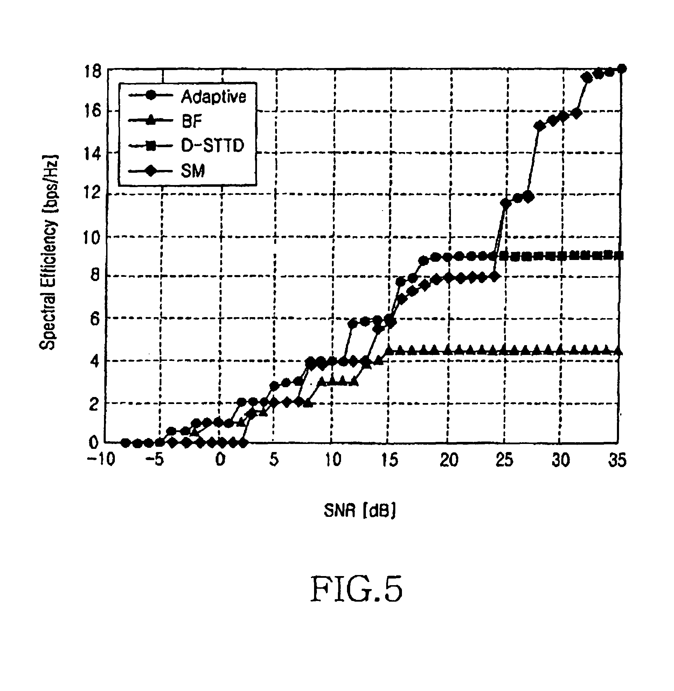

FIG. 5 is a graph illustrating performance simulation results for an adaptive transmission mode switching method in accordance with a preferred embodiment of the present invention and a conventional fixed MIMO transmission scheme using an adaptive modulation and coding scheme (MCS). The simulation was performed for Channel Model 1 (rich scattering environment), but can be extended to other channel models.

Referring to FIG. 5, it is shown that the adaptive transmission mode switching method of the present invention produces gain in spectral efficiency of 13.5 bps/Hz for an SNR as compared with the BF scheme.

As described above, because an MIMO communication system using the adaptive transmission mode switching method of the present invention switches between MIMO transmission modes using spatial selectivity of the channel, it can obtain the maximum gain in an SNR and spectral efficiency.

Although preferred embodiments of the present invention have been disclosed for illustrative purposes, those skilled in the art will appreciate that various modifications, additions, and substitutions are possible, without departing from the scope of the present invention. Accordingly, the present invention is not limited to the above-described embodiments, but is defined by the following claims.

**Claims**

1. A multiple-input multiple-output, MIMO, wireless communication system, comprising:

   a transmitter having a plurality of transmit antennas for selecting one of at least two transmission schemes including a spatial multiplexing scheme and a spatial diversity scheme, processing a signal in the selected transmission scheme, and transmitting the signal through the plurality of transmit antennas; and
   at least one receiver having a plurality of receive antennas for processing a signal through the plurality of receive antennas in a reception scheme mapped to a transmission scheme of the transmitter
   wherein the transmitter is adapted for selecting the one of the transmission schemes based on a relative condition number that is determined by a ratio between maximum and minimum eigenvalues of a spatial correlation matrix of a channel.

2. The MIMO wireless communication system of claim 1, wherein the transmission schemes depend on channel state information fed back from the at least one receiver.

3. The MIMO wireless communication system of claim 2, wherein the channel state information comprises an average signal to noise ratio, SNR.

4. The MIMO wireless communication system of claim 2, wherein the channel state information comprises the relative condition number.

5. The MIMO wireless communication system of one of claims 1 to 4, wherein the transmission schemes depend on channel quality regions.

6. The MIMO wireless communication system of claim 5, wherein the channel quality regions are defined by a combination of four channel models and SNR threshold values, the four channel models being defined by spatial selectivity that is a function of angle spread, AS, number of clusters, and Ricean K-factor.

7. The MIMO wireless communication system of claim 6, wherein the channel quality regions are predicted according to an average signal to noise ratio, SNR, and the relative condition number $D_\lambda$.

8. The MIMO wireless communication system of claim 6, wherein the four channel models comprise:

   a first model having characteristics of non-line-of-sight, N-LOS, and high AS;
   a second model having characteristics of NLOS and low AS;
   a third model having characteristics of quasi-line-of-sight, Q-LOS; and
   a fourth model having characteristics of full-line-of-sight, F-LOS.

**9.** The MIMO wireless communication system of claim 8, wherein the channel quality regions comprise four channel regions mapped to the channel models, the four channel regions being defined by $D_\lambda \in [1,5)$, $D_\lambda \in [5,30)$, $D_\lambda \in [30,90)$, and $D_\lambda \in [90,+\infty)$, respectively.

**10.** The MIMO wireless communication system of one of claims 1 to 9, wherein the transmitter comprises:

a controller (300) for outputting a control signal for processing an input data signal;
an encoding/modulation unit (310) for encoding and modulating the data signal in response to the control signal;
a mode switching unit (320) for selecting one of the at least two transmission modes in response to the control signal, and processing and outputting transmission symbols in the selected transmission mode; and
a digital to analog, D/A, conversion unit (330) for converting the transmission symbols output from the mode switching unit (320) according to D/A conversion and transmitting the converted symbols through the plurality of transmit antennas.

**11.** The MIMO wireless communication system of claim 10, wherein the mode switching unit (320) comprises:

MIMO modules operating in at least two different MIMO algorithms;
a first switch (321) for selectively connecting an output terminal of the encoding/modulation unit to an input terminal of the MIMO modules in response to a control signal; and
a second switch (329) for selectively connecting an output terminal of the MIMO modules to an input terminal of the D/A conversion unit.

**12.** The MIMO wireless communication system of claim 11, wherein the MIMO modules comprise:

a spatial multiplexing, SM, module (323) for processing the transmission symbols in an SM algorithm;
a double space time transmit diversity, DSTTD, module (325) for processing the transmission symbols in a DSTTD algorithm; and
a beamforming, BF, module (327) for processing the transmission symbols in a BF algorithm.

**13.** The MIMO wireless communication system of claim 12, wherein the control signal comprises a transmission mode indicator determined by the controller (300) according to channel state information received from the at least one receiver.

**14.** The MIMO wireless communication system of claim 13, wherein the channel state information comprises an average signal to noise ratio, SNR.

**15.** The MIMO wireless communication system of claim 13, wherein the channel state information comprises the relative condition number.

**16.** The MIMO wireless communication system of claim 4 or 7 or 15, wherein the relative condition number is expressed by:

$$D_\lambda = \frac{\lambda_{max}}{\lambda_{min}},$$

where $\lambda_{max}$ and $\lambda_{min}$ denote maximum and minimum eigenvalues of a spatial correlation matrix of a MIMO channel, respectively.

**17.** The MIMO wireless communication system of claim 16, wherein $1 \leq D_\lambda \leq +\infty$.

**18.** The MIMO wireless communication system of claim 17, wherein the transmission mode indicator comprises information about a MIMO scheme and an adaptive modulation and coding, AMC, scheme.

**19.** The MIMO wireless communication system of claim 18, wherein the controller (300) comprises:

a look-up table (340) for mapping the relative condition number $D_\lambda$ to the MIMO scheme and the AMC scheme.

20. The MIMO wireless communication system of one of claims 1 to 19, wherein the at least one receiver comprises:

an analog to digital, A/D, conversion unit (410) for converting a signal received through the plurality of receive antennas according to A/D conversion;
a channel estimator (440) for estimating a channel using an output signal of the A/D conversion unit (410);
a reception mode switching unit (420) for processing the output signal of the A/D conversion unit (410) using an estimate of a channel estimated by the channel estimator (440) in a reception mode mapped to the transmission scheme selected by the transmitter; and
a decoding/demodulation unit (430) for decoding and demodulating an output signal of the reception mode switching unit (420), based on the channel estimate and the transmission scheme, and outputting original data.

21. The MIMO wireless communication system of claim 20, wherein the reception mode switching unit (420) comprises:

a plurality of signal processing modules (423, 425, 427) operating in signal processing algorithms mapped to MIMO modules of the transmitter;
a third switch (441) for selectively connecting an output terminal of the A/D conversion unit (410) to an input terminal of the plurality of signal processing modules in response to transmission mode information; and
a fourth switch (429) for selectively connecting an output terminal of the plurality of signal processing modules (423, 425, 427) to the decoding/demodulation unit (430).

22. The MIMO wireless communication system of claim 21, wherein each of the plurality of signal processing modules (423, 425, 427) comprises:

at least one processing module using a minimum mean squared error, MMSE, scheme; and
at least one processing module using a maximum ratio combining, MRC, scheme.

23. A method for selecting an optimal MIMO transmission and reception scheme in a multiple-input multiple-output, MIMO, wireless communication system, wherein the method comprises:

selecting one of at least two transmission schemes by a plurality of transmit antennas of a transmitter, wherein said at least two transmission schemes includes a spatial multiplexing scheme and a spatial diversity scheme, processing a signal in the selected transmission scheme, and
transmitting the signal through the plurality of transmit antennas; and
processing a signal through a plurality of receive antennas in a reception scheme mapped to a transmission scheme of the transmitter, wherein said plurality of receive antennas belong to at least one receiver,
wherein the transmitter is adapted for selecting the one of the transmission schemes based on a relative condition number that is determined by a ratio between maximum and minimum eigenvalues of a spatial correlation matrix of a channel.

24. The method of claim 23 adapted to operate the multiple-input multiple-output, MIMO, wireless communication system according to one of claims 1 to 22.

**Patentansprüche**

1. MIMO(multiple-input multiple-output)-Drahtlos-Kommunikationssystem, das umfasst:

eine Sendeeinrichtung mit einer Vielzahl von Sendeantennen zum Auswählen eines von wenigstens zwei Sendeschemen, die ein Raum-Multiplex-Schema und ein Raum-Diversity-Schema einschließen, zum Verarbeiten eines Signals in dem ausgewählten Sendeschema und zum Senden des Signals über die Vielzahl von Sendeantennen; und
wenigstens eine Empfangseinrichtung mit einer Vielzahl von Empfangsantennen zum Verarbeiten eines Signals über die Vielzahl von Empfangsantennen in einem Empfangsschema, das einem Sendeschema der Sendeeinrichtung zugeordnet ist,
wobei die Sendeeinrichtung so eingerichtet ist, dass sie das eine der Sendeschemen auf Basis einer Zahl einer relativen Bedingung (relative condition number) auswählt, die durch ein Verhältnis zwischen maximalem und minimalem Eigenwert einer Raumkorrelationsmatrix eines Kanals bestimmt wird.

2. MIMO-Drahtlos-Kommunikationssystem nach Anspruch 1, wobei die Sendeschemen von Kanalstatusinformationen abhängen, die von der wenigstens einen Empfangseinrichtung zurückgeführt werden.

3. MIMO-Drahtlos-Kommunikationssystem nach Anspruch 2, wobei die Kanalstatusinformationen ein durchschnittliches Signal-Rausch-Verhältnis umfassen.

4. MIMO-Drahtlos-Kommunikationssystem nach Anspruch 2, wobei die Kanalstatusinformationen die Zahl der relativen Bedingung umfassen.

5. MIMO-Drahtlos-Kommunikationssystem nach einem der Ansprüche 1 bis 4, wobei die Sendeschemen von Kanalqualitätsbereichen abhängen.

6. MIMO-Drahtlos-Kommunikationssystem nach Anspruch 5, wobei die Kanalqualitätsbereiche durch eine Kombination von vier Kanalmodellen und Schwellenwerten des Signal-Rausch-Verhältnisses definiert werden und die vier Kanalmodelle durch Raum-Selektivität definiert werden, die eine Funktion von Winkelspreizung, Anzahl von Clustern und Riceschem K-Faktor ist.

7. MIMO-Drahtlos-Kommunikationssystem nach Anspruch 6, wobei die Kanalqualitätsbereiche entsprechend einem durchschnittlichen Signal-Rausch-Verhältnis und der Zahl $D_\lambda$ der relativen Bedingung vorhergesagt werden.

8. MIMO-Drahtlos-Kommunikationssystem nach Anspruch 6, wobei die vier Kanalmodelle umfassen:

ein erstes Modell, das sich durch Nicht-Sichtverbindung (non-line-of-sight) und große Winkelspreizung auszeichnet;
ein zweites Modell, das sich durch Nicht-Sichtverbindung und geringe Winkelspreizung auszeichnet;
ein drittes Modell, das sich durch Quasi-Sichtverbindung auszeichnet; und
ein viertes Modell, das sich durch Voll-Sichtverbindung auszeichnet.

9. MIMO-Drahtlos-Kommunikationssystem nach Anspruch 8, wobei die Kanalqualitätsbereiche vier Kanalbereiche umfassen, die den Kanalmodellen zugeordnet sind, und die vier Kanalbereiche durch $D_\lambda \in [1,5)$, $D_\lambda \in [5,30)$, $D_\lambda \in [30,90)$ bzw. $D_\lambda \in [90,+\infty)$ definiert werden.

10. MIMO-Drahtlos-Kommunikationssystem nach einem der Ansprüche 1 bis 9, wobei die Sendeeinrichtung umfasst:

eine Steuereinheit (300) zum Ausgeben eines Steuersignals zur Verarbeitung eines Eingangs-Datensignals;
eine Kodier-Modulations-Einheit (310) zum Kodieren und Modulieren des Datensignals in Reaktion auf das Steuersignal;
eine Modus-Umschalteinheit (320) zum Auswählen eines der wenigstens zwei Sende-Modi in Reaktion auf das Steuersignal und zum Verarbeiten und Ausgeben von Sendesymbolen in dem ausgewählten Sende-Modus; und
eine Digital-Analog-Umwandlungs-Einheit (330) zum Umwandeln der von der Modus-Umschalteinheit (320) ausgegebenen Sendesymbole entsprechend der Digital-Analog-Umwandlung und zum Senden der umgewandelten Symbole über die Vielzahl von Sendeantennen.

11. MIMO-Drahtlos-Kommunikationssystem nach Anspruch 10, wobei die Modus-Umschalteinheit (320) umfasst:

MIMO-Module, die in wenigstens zwei verschiedenen MIMO-Algorithmen arbeiten;
einen ersten Schalter (321) zum selektiven Verbinden eines Ausgangsanschlusses der Kodier-Modulations-Einheit mit einem Eingangsanschluss der MIMO-Module in Reaktion auf ein Steuersignal; und
einen zweiten Schalter (329) zum selektiven Verbinden eines Ausgangsanschlusses der MIMO-Module mit einem Eingangsanschluss der Digital-Analog-Umwandlungs-Einheit.

12. MIMO-Drahtlos-Kommunikationssystem nach Anspruch 11, wobei die MIMO-Module umfassen
ein Raum-Multiplex-Modul (323) zum Verarbeiten der Sendesymbole in einem Raum-Multiplex-Algorithmus;
ein DSTTD(double space time transmit diversity)-Modul (325) zum Verarbeiten der Sende-Symbole in einem DSTTD-Algorithmus; und
ein Strahlformungs-Modul (327) zum Verarbeiten der Sendesymbole in einem Strahlformungs-Algorithmus.

**13.** MIMO-Drahtlos-Kommunikationssystem nach Anspruch 12, wobei das Steuersignal ein Sendemodus-Indikator umfasst, der durch die Steuereinheit (300) entsprechend Kanalstatusinformationen bestimmt wird, die von der wenigstens einen Empfangseinrichtung empfangen werden.

**14.** MIMO-Drahtlos-Kommunikationssystem nach Anspruch 13, wobei die Kanalstatusinformationen ein durchschnittliches Signal-Rausch-Verhältnis umfassen.

**15.** MIMO-Drahttos-Kommunikationssystem nach Anspruch 13, wobei die Kanalstatusinformationen die Zahl der relativen Bedingung umfassen.

**16.** MIMO-Drahtlos-Kommunikationssystem nach Anspruch 4 oder 7 oder 15, wobei die Zahl der relativen Bedingung ausgedrückt wird durch:

$$D_\lambda = \frac{\lambda_{max}}{\lambda_{min}},$$

wobei $\lambda_{max}$ und $\lambda_{min}$ maximalen bzw. minimalen Eigenwert einer Raumkorrelations-Matrix eines MIMO-Kanals bezeichnen.

**17.** MIMO-Drahtlos-Kommunikationssystem nach Anspruch 16, wobei:

$$1 \leq D_\lambda \leq +\infty.$$

**18.** MIMO-Drahtlos-Kommunikationssystem nach Anspruch 17, wobei der Sendemodus-Indikator Informationen über ein MIMO-Schema und ein adaptives Modulations-und-Kodier-Schema umfasst.

**19.** MIMO-Drahtlos-Kommunikationssystem nach Anspruch 18, wobei die Steuereinheit (300) umfasst:

eine Verweistabelle (340) zum Zuordnen der Zahl der relativen Bedingung $D_\lambda$, zu dem MIMO-Schema und dem adaptiven Modulations-und-Kodier-Schema.

**20.** MIMO-Drahtfos-Kommunikationsvorrichtung nach einem der Ansprüche 1 bis 19, wobei der wenigstens eine Empfänger umfasst:

eine Analog-Digital-Umwandlungs-Einheit (410) zum Umwandeln eines über die Vielzahl von Empfangsantennen empfangenen Signals entsprechend Analog-Digital-Umwandlung;
eine Kanal-Schätzeinrichtung (440) zum Schätzen eines Kanals unter Verwendung eines Ausgangssignals der Analog-Digital-Umwandlungseinheit;
eine Empfangsmodus-Umschalteinheit (420) zum Verarbeiten des Ausgangssignals der Analog-Digital-Umwandlungs-Einheit (410) unter Verwendung eines Schätzwertes eines durch die Kanal-Schätzeinrichtung (440) geschätzten Kanals in einem Empfangs-Modus, der dem Sende-Schema zugeordnet ist, das durch die Sendeeinrichtung ausgewählt wird; und
eine Dekodier-Demodulations-Einheit (430) zum Dekodieren und Demodulieren eines Ausgangssignals der Empfangsmodus-Umschalteinheit (420) auf Basis des Kanal-Schätzwertes und des Sende-Schemas und zum Ausgeben von Ursprungsdaten.

**21.** MIMO-Drahtlos-Kommunikationssystem nach Anspruch 20, wobei die Empfangsmodus-Umschalteinheit (420) umfasst:

eine Vielzahl von Signalverarbeitungsmodulen (423, 425, 427), die in Signalverarbeitungsalgorithmen arbeiten, die MIMO-Modulen der Sendeeinrichtung zugeordnet sind; einen dritten Schalter (441) zum selektiven Verbinden eines Ausgangsanschlusses der Analog-Digital-Umwandlungs-Einheit (410) mit einem Eingangsanschluss der Vielzahl von Signalverarbeitungsmodulen in Reaktion auf Sendemodus-Informationen; und
einen vierten Schalter (429) zum selektiven Verbinden eines Ausgangsanschlusses der Vielzahl von Signalverarbeitungsmodulen (423, 425, 427) mit der Dekodier-Demodulations-Einheit (430).

22. MIMO-Drahtlos-Kommunikationssystem nach Anspruch 21, wobei jedes der Vielzahl von Signalverarbeitungsmodulen (423, 425, 427) umfasst:

wenigstens ein Verarbeitungsmodul, das ein MMSE (minimum mean squared error)-Schema verwendet; und wenigstens ein Verarbeitungsmodul, das ein MRC (maximum ratio combining)-Schema verwendet.

23. Verfahren zum Auswählen eines optimalen MIMO-Sende-und-Empfangs-Schemas in einen MIMO (multiple-input multiple-output)-Drahtlos-Kommunikationssystem, wobei das Verfahren umfasst:

Auswählen eines von wenigstens zwei Sende-Schemen durch eine Vielzahl von Sendeantennen einer Sendeeinrichtung, wobei die wenigstens zwei Sende-Schemen ein Raum-Multiplex-Schema und ein Raum-Diversity-Schema einschließen,
Verarbeiten eines Signals in dem ausgewählten Sende-Schema, und
Senden des Signals über die Vielzahl von Sendeantennen; und
Verarbeiten eines Signals über eine Vielzahl von Empfangsantennen in einem Empfangs-Schema, das einem Sende-Schema der Sendeeinrichtung zugeordnet ist, wobei die Vielzahl von Empfangsantennen zu wenigstens einer Empfangseinrichtung gehören,
wobei die Sendeeinrichtung so eingerichtet ist, dass sie das eine der Sende-Schemen auf Basis einer Zahl einer relativen Bedingung auswählt, die durch ein Verhältnis zwischen maximalem und minimalem Eigenwert einer Raum-Korrelations-Matrix eines Kanals bestimmt wird.

24. Verfahren nach Anspruch 23, das so eingerichtet ist, dass es das MIMO-Drahtlos-Kommunikationssystem nach einem der Ansprüche 1 bis 22 betreibt.


**Revendications**

1. Système de communication sans fil à entrées et sorties multiples, MIMO pour « *Multiple Input Multiple Output* », comprenant :

un émetteur comptant une pluralité d'antennes d'émission, destiné à sélectionner l'un d'au moins deux mécanismes d'émission incluant un mécanisme de multiplexage spatial et un mécanisme de diversité spatiale, à traiter un signal dans le mécanisme d'émission sélectionné et à émettre le signal sur la pluralité d'antennes d'émission ; et
au moins un récepteur comptant une pluralité d'antennes de réception, destiné à traiter le signal reçu sur la pluralité d'antennes de réception dans un mécanisme de réception correspondant au mécanisme d'émission de l'émetteur ;
dans lequel l'émetteur est conçu pour sélectionner un des mécanismes d'émission sur la base d'un nombre relatif d'état qui est déterminé par un rapport entre des valeurs propres maximale et minimale d'une matrice de corrélation spatiale d'un canal.

2. Système de communication sans fil MIMO selon la revendication 1, dans lequel les mécanismes d'émission dépendent d'informations d'état du canal renvoyées par ledit au moins un récepteur.

3. Système de communication sans fil MIMO selon la revendication 2, dans lequel les informations d'état du canal comprennent un rapport signal sur bruit moyen.

4. Système de communication sans fil MIMO selon la revendication 2, dans lequel les informations d'état du canal comprennent le nombre relatif d'état.

5. Système de communication sans fil MIMO selon l'une des revendications 1 à 4, dans lequel les mécanismes d'émission dépendent de régions de qualité du canal.

6. Système de communication sans fil MIMO selon la revendication 5, dans lequel les régions de qualité du canal sont définies par une combinaison de quatre modèles de canal et de valeurs de seuil de rapport signal sur bruit, les quatre modèles de canal étant définis par une sélectivité spatiale qui est une fonction de l'étalement angulaire, AS

**EP 1 643 661 B1**

pour « *Angle Spread* », du nombre de groupes et du facteur K de Rice.

**7.** Système de communication sans fil MIMO selon la revendication 6, dans lequel les régions de qualité du canal sont prédites en fonction d'un rapport signal sur bruit moyen et du nombre relatif d'état $D_\lambda$.

**8.** Système de communication sans fil MIMO selon la revendication 6, dans lequel les quatre modèles de canal comprennent :

un premier modèle ayant les caractéristiques d'absence de ligne de vue et de paramètre AS élevé ;
un deuxième modèle ayant les caractéristiques d'absence de ligne de vue et de paramètre AS faible ;
un troisième modèle ayant les caractéristiques de quasi-ligne de vue ; et
un quatrième modèle ayant les caractéristiques de ligne de vue intégrale.

**9.** Système de communication sans fil MIMO selon la revendication 8, dans lequel les régions de qualité du canal comprennent quatre régions de canal correspondant aux modèles de canal, les quatre régions de canal étant définies par $D_\lambda \in [1, 5)$, $D_\lambda \in [5, 30)$, $D_\lambda \in [30, 90)$ et $D_\lambda \in [90, +\infty)$, respectivement.

**10.** Système de communication sans fil MIMO selon l'une des revendications 1 à 9, dans lequel l'émetteur comprend :

un contrôleur (300), destiné à produire un signal de commande pour le traitement d'un signal de données d'entrée ;
une unité de codage et de modulation (310), destinée à coder et moduler le signal de données en réponse au signal de commande ;
une unité de commutation de mode (320), destinée à sélectionner l'un desdits au moins deux modes d'émission en réponse au signal de commande et à traiter et produire en sortie des symboles d'émission dans le mode d'émission sélectionné ; et
une unité de conversion numérique-analogique (330), destinée à convertir les signaux numériques d'émission produits par l'unité de commutation de mode (320) en signaux analogiques et à émettre les signaux convertis via la pluralité d'antennes d'émission.

**11.** Système de communication sans fil MIMO selon la revendication 10, dans lequel l'unité de commutation de mode (320) comprend :

des modules MIMO fonctionnant selon au moins deux algorithmes MIMO différents ;
un premier commutateur (321), destiné à connecter sélectivement une borne de sortie de l'unité de codage et de modulation à une borne d'entrée des modules MIMO, en réponse à un signal de commande ; et
un deuxième commutateur (329), destiné à connecter sélectivement une borne de sortie des modules MIMO à une borne d'entrée de l'unité de conversion numérique-analogique.

**12.** Système de communication sans fil MIMO selon la revendication 11, dans lequel les modules MIMO comprennent :

un module de multiplexage spatial (323), destiné à traiter les symboles d'émission dans un algorithme de multiplexage spatial ;
un module de diversité double spatio-temporelle à l'émission (325), destiné à traiter les symboles d'émission dans un algorithme de diversité double spatio-temporelle à l'émission ; et
un module de formation de faisceaux (327), destiné à traiter les symboles d'émission dans un algorithme de formation de faisceaux.

**13.** Système de communication sans fil MIMO selon la revendication 12, dans lequel le signal de commande comprend un indicateur de mode d'émission déterminé par le contrôleur (300) en fonction d'informations d'état du canal reçu dudit au moins un récepteur.

**14.** Système de communication sans fil MIMO selon la revendication 13, dans lequel les informations d'état du canal comprennent un rapport signal sur bruit moyen.

**15.** Système de communication sans fil MIMO selon la revendication 13, dans lequel les informations d'état du canal comprennent le nombre relatif d'état.

**16.** Système de communication sans fil MIMO selon la revendication 4, 7 ou 15, dans lequel nombre relatif d'état est exprimé de la manière suivante :

$$D_\lambda = \lambda_{max} / \lambda_{min},$$

où $\lambda_{max}$ et $\lambda_{min}$ représentent les valeurs propres maximale et minimale d'une matrice de corrélation spatiale d'un canal MIMO, respectivement.

**17.** Système de communication sans fil MIMO selon la revendication 16, dans lequel on a $1 \le D_\lambda \le +\infty$.

**18.** Système de communication sans fil MIMO selon la revendication 17, dans lequel l'indicateur de mode d'émission comprend des informations sur un mécanisme MIMO et sur un mécanisme de modulation et de codage adaptatif.

**19.** Système de communication sans fil MIMO selon la revendication 18, dans lequel le contrôleur (300) comprend :

une table de consultation (340) destinée à établir la correspondance entre le nombre relatif d'état $D_\lambda$ et le mécanisme MIMO et le mécanisme de modulation et de codage adaptatif.

**20.** Système de communication sans fil MIMO selon l'une des revendications 1 à 19, dans lequel ledit au moins un récepteur comprend :

une unité de conversion analogique-numérique (410), destinée à convertir un signal analogique reçu sur une pluralité d'antennes de réception en signal numérique ;
un estimateur de canal (440), destiné à estimer un canal en utilisant un signal de sortie de l'unité de conversion analogique-numérique (410) ;
une unité de commutation de mode de réception (420), destinée à traiter le signal de sortie de l'unité de conversion analogique-numérique (410) en utilisant une estimation du canal fournie par l'estimateur de canal (440), dans un mode de réception correspondant au mécanisme d'émission sélectionné par l'émetteur ; et
une unité de décodage et de démodulation (430), destinée à décoder et démoduler un signal de sortie de l'unité de commutation de mode de réception (420), sur la base de l'estimation de canal et du mécanisme d'émission, et à produire en sortie des données originales.

**21.** Système de communication sans fil MIMO selon la revendication 20, dans lequel l'unité de commutation de mode de réception (420) comprend :

une pluralité de modules de traitement du signal (423, 425, 427), fonctionnant avec des algorithmes de traitement du signal qui correspondent aux modules MIMO de l'émetteur ;
un troisième commutateur (441), destiné à connecter sélectivement une borne de sortie de l'unité de conversion analogique-numérique (410) à une borne d'entrée de la pluralité de modules de traitement du signal, en réponse à des informations de mode d'émission ; et
un quatrième commutateur (429), destiné à connecter sélectivement une borne de sortie de la pluralité de modules de traitement du signal (423, 425, 427) à l'unité de décodage et de démodulation (430).

**22.** Système de communication sans fil MIMO selon la revendication 21, dans lequel, dans la pluralité de modules de traitement du signal (423, 425, 427), chacun comprend :

au moins un module de traitement utilisant un mécanisme d'erreur quadratique moyenne minimale ; et
au moins un module de traitement utilisant un mécanisme de combinaison à rapport maximal.

**23.** Procédé de sélection d'un mécanisme optimal d'émission et de réception MIMO dans un système de communication sans fil à entrées et sorties multiples, MIMO, dans lequel le procédé comprend les étapes consistant à :

sélectionner l'un des au moins deux mécanismes d'émission par une pluralité d'antennes d'émission d'un émetteur, lesdits au moins deux mécanismes d'émission comprenant un mécanisme de multiplexage spatial et un mécanisme de diversité spatiale ;
traiter un signal dans le mécanisme d'émission sélectionné ;

émettre le signal sur la pluralité d'antennes d'émission ; et

traiter un signal reçu sur une pluralité d'antennes de réception dans un mécanisme de réception correspondant à un mécanisme d'émission de l'émetteur, ladite pluralité d'antennes de réception appartenant à au moins un récepteur ;

dans lequel l'émetteur est conçu pour sélectionner un des mécanismes d'émission sur la base d'un nombre relatif d'état qui est déterminé par un rapport entre des valeurs propres maximale et minimale d'une matrice de corrélation spatiale d'un canal.

24. Procédé selon la revendication 23, conçu pour faire fonctionner le système de communication sans fil à entrées et sorties multiples, MIMO, selon l'une des revendications 1 à 22.

FIG.1

FIG.2

FIG.3

FIG.4

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03085876 A1